# EUROPEAN PATENT SPECIFICATION

(11) **EP 0 844 012 B1**
(45) Date of publication and mention of the grant of the patent: **13.08.2003**
(21) Application number: 97118188.8
(22) Date of filing: 20.10.1997
(51) Int. Cl.: B01D 27/08, B01D 35/30

(54) **Oil filter**
Ölfilter
Filtre à huile

(30) Priority: 20.11.1996 JP 30907896; 09.07.1997 JP 18352197
(43) Date of publication of application: 27.05.1998
(73) Proprietor: DENSO CORPORATION, Kariya-City Aichi-Pref. 448 (JP)
(72) Inventor: Fukumori, Sadahito, Kariya-city, Aichi-pref. 448 (JP); Tomita, Masahiro, Kariya-city, Aichi-pref. 448 (JP); Yonemoto, Tosiyuki, Kariya-city, Aichi-pref. 448 (JP); Ueda, Hiroshi, Kariya-city. Aichi-pref. 448 (JP)
(74) Representative: Pellmann, Hans-Bernd, Dipl.-Ing.

(56) References cited:
- EP-A- 0 269 895
- EP-A- 0 442 365
- EP-A- 0 692 292
- EP-A- 0 702 144
- DE-A- 4 330 839

## Description

The present invention relates to an oil filter enabling the replacement of a filter element, for example, to an element-replaceable type oil filter arranged to filter impurity and the like which enter into oil for lubricating an internal combustion engine. The present invention further relates to a drain mechanism for an oil filter for an internal combustion engine.

Conventionally, as a prior art, an element-replaceable type filter is known as disclosed in JP-A-7-100309. In this filter, in which when an element-replacing work is performed at a time of maintenance, a gasket (O-ring) mounted between two casing members having a filter element assembly received therein is also replaced for the maintenance of reliability along with the mounting and demounting of the element assembly. With this prior art, the replacing work of the gasket (O-ring) following the replacement of the element is troublesome, with the result that it is practically impossible to prevent the occurrence of the replacement failure thereof or the mounting failure thereof.

Another prior art is disclosed in EP-A-0 314915. According to this prior art, when a cap including a filter element is loosened for replacing the oil filter element, an oil draining valve is opened by the repulsion of a spring so that the oil is discharged. However, this structure for the draining portion requires the valve and the spring.

Further, EP-A-0692292 discloses a liquid filter comprising a filter housing having at least one liquid intake channel and at least one liquid return channel passing through a face wall of the filter housing that faces toward a filter connecting flange to which said filter housing is to be mounted, a releasable cover that closes the filter housing liquid-tight, and an individually replaceable filter insert that can be removed from the filter housing. The liquid filter has a drain opening in the circumferential wall of the housing which is normally tightly closed by a screw.

### SUMMARY OF THE INVENTION

It is an object of the present invention to provide an oil filter having a replaceable filter element which simplifies a replacement or mounting work of a sealing member following the replacement of the filter element and allows oil to flow out of an oil discharge drain at the time of replacing the filter element.

According to the invention, the above object is achieved by an oil filter having the combination of features defined in claim 1. The dependent claims set forth developments of the invention.

By the arrangement as defined claim 1, the first seal member keeps the seal between the filter element sub-assembly, the cap, and the base and can be replaced by a new one together with the filter element sub-assembly to prevent the occurrence of a replacement or mounting failure thereof. Further, when the cap is loosened at the time of replacing the filter element sub-assembly, the first seal member is released to allow oil to flow out the drain port.

### BRIEF DESCRIPTION OF THE DRAWINGS

Other objects, features and advantages of the invention will become apparent from the following detailed description when read with reference to the accompanying drawings, in which:
Fig. 1 is a sectional view of an oil filter according to a preferred embodiment of the invention;
Fig. 2 is a sectional view of the oil filter illustrating a flow of oil in the oil filter of the preferred embodiment at an engine running time;
Fig. 3 is a sectional view of the oil filter illustrating a flow of oil in the oil filter of the preferred embodiment at an oil filter replacing time;
Fig. 4 is a partial sectional view of an oil filter according to a modification of the preferred embodiment; and
Fig. 5 is a partial sectional view of an oil filter according to a further modification of the preferred embodiment.

### DETAILED DESCRIPTION OF THE PREFERRED EMBODIMENT

The present invention will be described in detail with reference to a preferred embodiment and its modifications shown in the drawings, in which the same or like parts are designated by the same numerals.

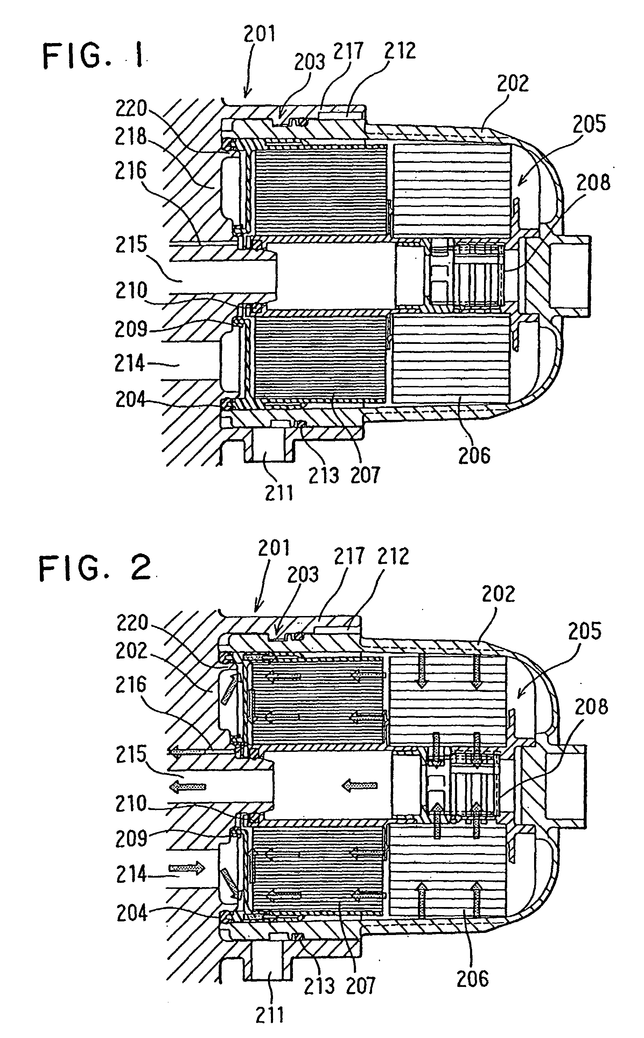

In the preferred embodiment of the oil filter, shown in Figs. 1, 2 and 3, a base 201 is provided at an engine block and has a portion, as formed of a cylindrical wall 217 and a bottom face portion 218, for mounting a cap 202. From the center of the bottom face portion 218, moreover, there is protruded an outlet 215 providing an oil outlet passage to engine sliding portions. in the circumferentially outer side of the outlet 215, there is formed a bypass hole 216 providing an outlet passage of the bypass oil to an oil pan (not shown). In the further circumferential outside, there is formed an inlet 214 providing an oil inlet passage. From the lower portion of the cylindrical wall 217, there is so protruded a drain port 211 providing an oil discharge passage for replacing the oil filter as to extend from the inner face of the cylindrical wall 217 to the outside. In the uppermost portion of the cylindrical wall 217 with respect to the drain port 211, on the other hand, there is provided a groove 212 for feeding the air into the housing when the oil is to be drained.

The cap 202 is made of a bottomed cylindrical container and is arranged in the cylindrical wall 217. These cap 202 and cylindrical wall 217 are joined by a joint portion which is composed of a projection and a groove constructing the bayonet mechanism. In the cap 202, there is mounted a filter element subassembly (S/A) 205 which is composed of a main or full filter element 206, a bypass filter element 207, a relief valve 208, seal members 209 and 210 forming a bypass flow circuit, and a seal member 204 sandwiched between the inlet 214 and the drain port 211.

The element S/A 205 is inserted and fixed in the cap 202. At the element replacing time, the element S/A 205 is extracted out of the cap 202, and a new element, S/A 205 is inserted again. On this new element S/A 205, there are supported the seal members 204, 209 and 210 which play important roles to seal the base 201 and the cap 202 and to define the bypass passage, so that the seal members can be replaced by new ones together with the element S/A 205.

When the cap 202 is mounted on the base 201, the bypass is defined by the seal members 209 and 210. The seal member 210 seals the seal portion of the element S/A 205 and the seal portion of the outer circumferential wall of the protrusion of the outlet 215 when it comes into contact with the two seal portions. The seal member 209 seals the seal portion of the element S/A 205 and the annular seal portion formed in the bottom face portion 218, when it is sandwiched inbetween at a position between the bypass hole 216 and the inlet 214. The seal member 204 keeps the seal between the outer circumferential face acting the seal portion of an annular projection 220, as formed at the circumferentially outer side of the inlet 214 formed in the bottom face portion 218, and the seal portion of the element S/A 205. The seal member 204 also keeps the seal between the seal portion of the element S/A 205 and the seal portion of the cap 202. As a result, the seal member 204 seals the seal portion of the projection 220 and the seal portion of the cap 202.

On the outer side of the cylindrical portion of the cap 202, there is fitted a seal member 213 which seals it and the seal portion of the inner face of the cylindrical wall 217. Thus, the oil is prevented from flowing out of the open end of the cylindrical wall 217. Here, the seal member 213 is located at the side close to the bottom face portion 218 than a groove 212, when the cap 212 is mounted on the base 201, and at a position over the groove 212 when the cap 202 is loosened.

On the other hand, the seal members 204, 210 and 213 are exemplified by O-rings, and seal means including those seal members constructs a cylindrical seal because one of the seal portions is given a cylindrical face. In this cylindrical seal, at least one of the opposing faces of the inner and outer overlapping cylindrical portions is formed into the cylindrical face, and the seal member is held in contact with the cylindrical face to effect the seal between the two cylindrical portions while allowing the two cylindrical portions axially along that cylindrical face. This cylindrical seal can be ensured even with a fine axial distortion in the cylindrical face.

Especially in the embodiment of Fig. 1, the seal means for sealing the base 201 and the cap 202 is constructed of the seal member 204 made of the O-ring, the outer circumference of the projection 220 acting as the seal portion at the side of the base 201, and the inner side face of the open end acting as the seal portion at the side of the cap 202. In this embodiment, therefore, the cylindrical seal is made by forming both the outer circumference of the projection 220 and the inner side face of the open end of the cap 202 into the cylindrical faces. Here, one of them may be given a cylindrical face.

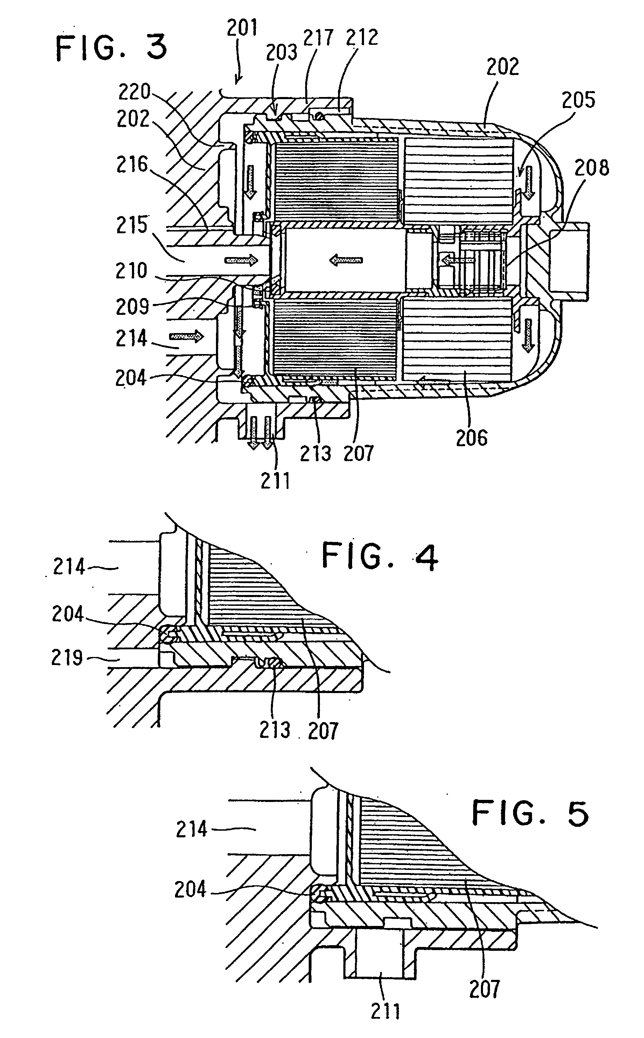

Fig. 2 illustrates flows of the engine oil at the running time. Since the base 201 and the element S/A 205 are sealed with the seal member 204, the oil, as introduced from the inlet 214, can be prevented from flowing out of the drain port 211 and the open end of the cylindrical wall 217 of the base 201. Since the seal members 209 and 210 isolate the inlet 214, the outlet 215 and the bypass hole 216 individually, moreover, they block the oil flows between the inlet 214 and the bypass hole 216 and between the bypass hole 216 and the outlet 215. As a result, the engine oil flows in through the inlet 214, and its portion is fed through the main filter element 206 from the outlet 215 to the engine sliding portions whereas the remainder is discharged through the bypass filter element 207 from the bypass hole 216 into the oil pan. When the main filter element 206 is clogged, the relief valve 208 is opened so that the oil is bypassed to the outlet 215.

Fig. 3 illustrates the flows of the oil when the cap 202 is removed at an engine stop so as to replace the element S/A 205. As the cap 202 is turned to release the joint between the base 201 and the cap 202, the seal members 204, 209 and 210, as supported by the element S/A 205 inserted and fitted in the cap 202, are carried together with the cap 202 rightward. As a result, the seal members 204, 209 and 210 are brought away from the seal portion at the side of the base 201 so that the seal is released. In this state, the cap 202 is in engagement with the base 201 so that it does not come out. Moreover, the oil in the inlet 214, the outlet 215 and the cap 202 is discharged, as indicated by arrows, from the drain port 211. As the cap 202 is then further turned, it is removed from the base 201. This makes it possible to prevent the oil from flowing out of the open end of the cylindrical wall 217 of the base 201 when the cap 202 is removed.

Here, between the cylindrical wall 217 of the base 201 and the cap 202, there is interposed the seal member 213 for preventing the oil from flowing out of the open end of the cylindrical wall 217. As a result, the oil does not flow out of the open end of the cylindrical wall 217 when it is discharged from the drain port 211. Above the drain port 211, moreover, there is formed the groove 212 as an air vent, which is shut out when the cap 202 is mounted in the base, so that no air flows in. When the cap 202 is loosened at the oil filter replacing time, the air vent is opened to eliminate the pressure difference between the inside and outside of the housing, so that the oil can be promptly discharged from the drain port 211.

The preferred embodiment may be modified as shown in Figs. 4 and 5. In the modification shown in Fig. 4, a drain port 219 is formed as a passage to the oil pan in the engine block. The oil is not drained to the outside but to the oil pan in this modification. As a result, there is realized a drain mechanism which is freed from blotting the outside. In the further modification shown in Fig. 5, on the other hand, not by providing the seal member 213 for preventing the oil outflow from the open end of the cylindrical wall 217 but by reducing the gap between the cylindrical wall 217 of the base 201 and the cylindrical portion of the cap 202, the oil is prevented from flowing out of the open end.

Here, the base 201 is constructed at the engine block in the foregoing embodiments, but the construction may be modified such that the base 201 is formed into a bracket to be attached to the engine block.

The present invention should not be limited to the disclosed embodiment and modifications but may be further modified or altered without departing from the scope of the invention, as defined in the claims.

## Claims

1. An oil filter, comprising:
a bottomed cylindrical cap (202) having a filter element sub-assembly (205) supported therein for integral movement therewith; a base (201) having a mounting portion (217) for mounting the cap;
a first seal member (204) supported on said filter element sub-assembly and movable integrally with the sub-assembly for providing a seal between the sub-assembly and the base and also between the sub-assembly and the cap, the first seal member being replaceable together with the filter element sub-assembly when the cap is removed from the base;
a drain port (211; 219) formed in the base at a side closer to an open end of the mounting portion than the first seal member; and
an inlet (214) formed in the base for providing an oil inlet passage communicated with an interior of the cap; and
an outlet (215) formed in the base for providing an oil outlet passage communicated with the interior of the cap.

2. An oil filter as in claim 1, further comprising a second seal member (210) for providing a seal between said outlet (215) formed in the base and said filter element sub-assembly (205) mounted in the cap.

3. An oil filter as in claim 1 or 2, further comprising:
a third seal member (213) disposed closer to the open end of the mounting portion than the drain port for providing a seal between the cap and the base.

4. An oil filter as in claim 1 or 2, wherein a small gap is formed between the cap and the mounting portion of the base.

5. An oil filter as in any one of claims 1 to 4, wherein the mounting portion has a groove (212) formed closer to its top side than the drain port and acting as an air vent.

6. An oil filter as in any one of claims 1 to 5, wherein the first seal member is shaped cylindrically.

## Patentansprüche

1. Ölfilter, der folgende Elemente aufweist:
eine mit Boden versehene zylindrische Haube (202), die eine darin gestützte Filterelement-Untergruppe (205) zur einstückigen Bewegung hat;
einen Sockel (201), der einen Montageabschnitt (217) zum Montieren der Haube hat;
ein erstes Abdichtelement (204), das auf der Filterelement-Untergruppe abgestützt ist und einstückig mit der Untergruppe bewegbar ist, zum Bereitstellen einer Abdichtung zwischen der Untergruppe und dem Sockel und auch zwischen der Untergruppe und der Haube, wobei das erste Abdichtelement zusammen mit der Filterelement-Untergruppe austauschbar ist, wenn die Haube von dem Sockel entfernt wird;
eine Ablauföffnung (211; 219), die im Sockel an einer Seite näher zu einem offenen Ende des Montageabschnitts als das erste Abdichtelement ausgebildet ist; und
ein Einlass (214), der im Sockel ausgebildet ist und zwar zum Bereitstellen eines Öleinlassdurchlaufs, der mit dem Innenraum der Haube verbunden ist; und
einen Auslass (215), der im Sockel ausgebildet ist und zwar zum Bereitstellen eines Ölauslassdurchlaufs, der mit dem Innenraum der Haube verbunden ist.

2. Ölfilter gemäß Anspruch 1, der weiter folgende Elemente aufweist:
ein zweites Abdichtelement (210) zum Bereitstellen einer Abdichtung zwischen dem Auslass (215), der im Sockel ausgebildet ist und der Filterelement-Untergruppe (205), die in der Haube montiert ist.

3. Ölfilter gemäß Anspruch 1 oder 2, der weiter folgende Elemente aufweist:
ein drittes Abdichtelement (213), das näher zum offenen Ende des Montageabschnitts angeordnet ist, als die Ablauföffnung, zum Bereitstellen einer Abdichtung zwischen der Haube und dem Sockel.

4. Ölfilter gemäß Anspruch 1 oder 2, wobei eine kleine Spalte zwischen der Haube und dem Montageabschnitt des Sockels ausgebildet ist.

5. Ölfilter gemäß irgendeinem der Ansprüche 1 bis 4, wobei der Montageabschnitt eine Nut (212) hat, die näher zur Oberseite ausgebildet ist als die Ablauföffnung und als Entlüftung fungiert.

6. Ölfilter gemäß irgendeinem der Ansprüche 1 bis 5, wobei das erste Abdichtelement zylindrisch geformt ist.

## Revendications

1. Filtre à huile, comprenant :
un capuchon cylindrique à fond (202) ayant un sous-ensemble d'élément de filtre (205) supporté à l'intérieur du capuchon pour un déplacement effectué de façon solidaire avec le capuchon ;
un socle (201) ayant une partie de montage (217) pour monter le capuchon ;
un premier élément d'étanchéité (204) supporté sur ledit sous-ensemble d'élément de filtre et pouvant se déplacer de façon solidaire avec le sous-ensemble pour fournir un joint entre le sous-ensemble et le socle et également entre le sous-ensemble et le capuchon, le premier élément d'étanchéité étant remplaçable conjointement avec le sous-ensemble d'élément de filtre lorsque le capuchon est ôté du socle ;
un orifice de vidange (211 ; 219) formé dans le socle d'un côté plus proche d'une extrémité ouverte de la partie de montage que du premier élément d'étanchéité ; et
une entrée (214) formée dans le socle pour fournir un passage d'entrée d'huile communiquant avec l'intérieur du capuchon ; et
une sortie (215) formée dans le socle pour fournir un passage de sortie d'huile communiquant avec l'intérieur du capuchon.

2. Filtre à huile selon la revendication 1, comprenant en outre un deuxième élément d'étanchéité (210) pour fournir un joint entre ladite sortie (215) formée dans le socle et ledit sous-ensemble d'élément de filtre (205) monté dans le capuchon.

3. Filtre à huile selon la revendication 1 ou 2, comprenant en outre :
un troisième élément d'étanchéité (213) disposé plus près de l'extrémité ouverte de la partie de montage que de l'orifice de vidange pour fournir un joint entre le capuchon et le socle.

4. Filtre à huile selon la revendication 1 ou 2, dans lequel un petit espace est formé entre le capuchon et la partie de montage du socle.

5. Filtre à huile selon l'une quelconque des revendications 1 à 4, dans lequel la partie de montage a une gorge (212) formée plus près de son côté supérieur que de l'orifice de vidange et servant d'évent d'aération.

6. Filtre à huile selon l'une quelconque des revendications 1 à 5, dans lequel le premier élément d'étanchéité a une forme cylindrique.
